# EUROPEAN PATENT APPLICATION

(11) **EP 3 258 522 A1**
(43) Date of publication of application: **20.12.2017**
(21) Application number: 16749242.0
(22) Date of filing: 09.02.2016
(51) Int. Cl.: H01M 8/0202, C22C 38/00, C22C 38/46, C22C 38/48, C22C 38/50, C23F 1/08, C23F 1/28, C23F 1/44, H01M 8/10

(54) **FERRITIC STAINLESS STEEL MATERIAL, SEPARATOR, SOLID POLYMER FUEL CELL, AND METHOD FOR PRODUCING SEPARATOR**

(30) Priority: 13.02.2015 JP 2015026421
(71) Applicant: Nippon Steel & Sumitomo Metal Corporation, Tokyo 100-8071 (JP)
(72) Inventor: TARUTANI, Yoshio, Tokyo 100-8071 (JP)
(74) Representative: J A Kemp
(86) International application number: PCT/JP2016/053843
(87) International publication number: WO 2016/129598

(57) **Abstract**

There is provided a ferritic stainless steel material that has a chemical composition comprising, in mass %: C: 0.001 to 0.030%, Si: 0.20 to 1.5%, Mn: 0.01 to 1.5%, P: 0.035% or less, S: 0.01% or less, Cr: 22.5 to 35.0%, Mo: 0.01 to 6.0%, Ni: 0.01 to 6.0%, Cu: 0.01 to 1.0%, Sn: 0.10 to 2.5%, In: 0.001 to 1.0%, N: 0.035% or less, V: 0.01 to 0.35%, Al: 0.001 to 1.0%, and the balance of Fe and inevitable impurities, and the calculated value of {Content of Cr (mass%) + 3 × Content of Mo (mass%)} being 22.5 to 45.0%. A polymer electrolyte fuel cell including a separator for which the steel material is used is remarkably excellent in corrosion resistance in an in-cell environment and has a contact electric resistance the same as that of a gold-plated member.

## Description

### TECHNICAL FIELD

The present invention relates to a ferritic stainless steel material, separator, polymer electrolyte fuel cell and a method for producing the separator. The separator used herein is also referred to as a bipolar plate.

### BACKGROUND ART

Fuel cells are batteries that generate direct-current using hydrogen and oxygen, and are roughly classified into a solid-electrolyte type, molten carbonate type, phosphoric-acid type, and polymer-electrolyte type. These types are derived from the constituent material of an electrolyte portion that constitutes the essential part of each type of fuel cells.

Nowadays, fuel cells reaching their commercialized phase include a phosphoric-acid type, which operates at about 200°C, and a molten-carbonate type, which operates at about 650°C. With the progress of technical development in recent years, a polymer-electrolyte type, which operates at about a room temperature, and a solid-electrolyte type, which operates at 700°C or higher, attract the attention as a vehicle-mounted power source or a compact residential power source.

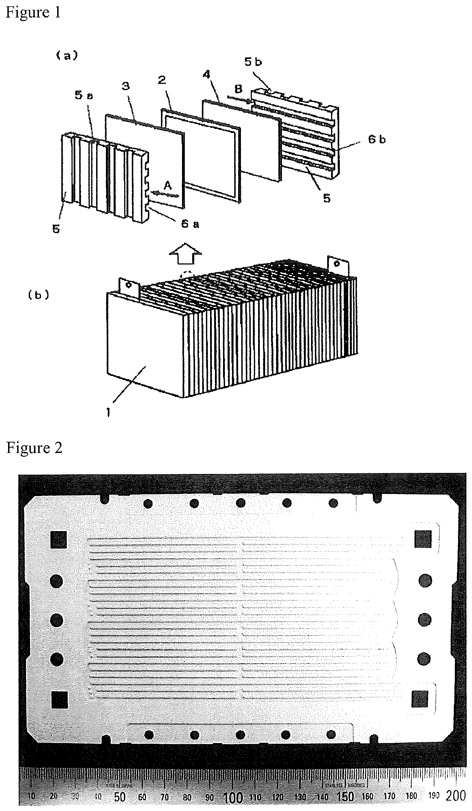

Figure 1 is a schematic diagram illustrating the structure of a polymer electrolyte fuel cell, where Figure 1(a) is a exploded view of the fuel cell (single cell), and Figure 1(b) is a perspective view of the entire fuel cell.

As illustrated in Figure 1(a) and Figure 1(b), a fuel cell 1 is an aggregation of single cells. A single cell has a structure in which, as illustrated in Figure 1(a), a fuel electrode layer (anode) 3 is located on one surface of a polymer electrolyte membrane 2, an oxidant electrode layer (cathode) 4 is located on the other surface of the polymer electrolyte membrane 2, separators 5a and 5b are located on both surfaces.

A typical polymer electrolyte membrane 2 is a fluorocarbon-type ion-exchange resin membrane that includes a hydrogen ion (proton) exchange group.

The fuel electrode layer 3 and the oxidant electrode layer 4 each include, on the surface of a diffusion layer that is made up of carbon paper or carbon cloth formed by carbon fiber, a catalyst layer that is made up of a particulate platinum catalyst, graphite powder, and a fluororesin including a hydrogen ion (proton) exchange group. The catalyst layer comes into contact with a fuel gas or an oxidative gas that passes through the diffusion layer.

Fuel gas (hydrogen or hydrogen-contained gas) A is caused to flow through channels 6a provided on the separator 5a, and hydrogen is supplied to the fuel electrode layer 3. In addition, oxidative gas B like air is caused to flow through channels 6b provided on the separator 5b, and oxygen is supplied. The supply of these gases causes electrochemical reaction, generating DC power.

The functions demanded of a polymer electrolyte fuel cell separator are: (1) a function as a "channel" that supplies the fuel gas on a fuel-electrode side uniformly across a surface; (2) a function as a" channel" that efficiently discharges water generated in the cathode side together with carrier gases such as air and oxygen after the reaction, from the fuel cell out of a system; (3) a function as a electric "connector" between single cells that keeps a low electric resistance and a good conductivity as an electrode for a long time; and (4) a function as a "partition wall" between an anode chamber of one of adjacent cells and a cathode chamber of the other cell.

Thus far, the application of a carbon plate material as a separator material has been intensively studied at a laboratory level. However, the carbon plate material involves a problem of being prone to be cracked and further involves a problem in that a machine working cost for flattening a surface and a machine working cost for forming the gas channels significantly increase. Both are major problems, and the situation is that the commercialization of fuel cells itself is difficult due to the problems.

Of all carbons, thermal expansive graphite processed goods are remarkably inexpensive and are attracting the most attention as a starting material for a polymer electrolyte fuel cell separator. However, dealing with an increasingly stringent dimensional accuracy, deterioration of a binding organic resin occurring with time in the application to the fuel cell, a hydrogen permeation problem called crossover, carbon corrosion that proceeds under an influence of fuel operation conditions, and unexpected cracking accident in assembling and using the fuel cell are left as problems that should be solved in the future.

As a movement against such a study of the application of graphite-based starting materials, an attempt to apply a stainless steel to a separator has been started for cost reduction.

Patent Document 1 discloses a separator for fuel cells that is made up of a metallic member and includes a contact surface with an electrode of a unit battery is directly subjected to gold plating. As the metallic member, a stainless steel, aluminum, and a Ni-Fe alloy are listed, and as the stainless steel, SUS304 is used. According to the invention, since the separator is subjected to the gold plating, a contact resistance between the separator and the electrode is reduced, electronic continuity from the separator to the electrode becomes good, and thus the output voltage of the fuel cell increases.

Patent Document 2 discloses a polymer electrolyte fuel cell in which use is made of a separator made up of a metal material from which a passivation film to be formed on a surface is easily generated by the air. As the metal material, a stainless steel and a titanium alloy are listed. According to the invention, the passivation film is always present on the surface of the metal used for the separator, which makes the surface of the metal less prone to erosion chemically, decreases a degree of ionizing water generated in the fuel cell, and curbs the reduction of electrochemical reactivity in the fuel cell. In addition, by removing a passivation film from a portion of the separator that is in contact with an electrode layer and the like and forming a noble metal layer on the portion, an electric contact resistance value decreases.

However, even if use is made of a metal material such as the stainless steels disclosed in Patent Documents 1 and 2, each including a passivation film on its surface, for a separator as it is, the dissolution of metals occurs because corrosion resistance is insufficient, and the capability of a support catalyst deteriorates by dissolved metal ions. In addition, corrosion products such as Cr-OH (chromium hydroxides) and Fe-OH (iron hydroxides) generated after the dissolution increase the contact resistance of the separator, and thus the current situation is that a separator made up of a metal material is subjected to noble metal plating such as gold plating, without regard to cost.

In such circumstances, there has been proposed a stainless steel that is excellent in corrosion resistance and applicable as a separator in its pure state, without performing expensive surface treatment.

Patent Document 3 discloses a ferritic stainless steel for polymer-electrolyte fuel cell separators that contains no B (boron) in steel, causes none of M23C6, M4C, M2C, MC carbide-based metal inclusions and M₂B metal borides to precipitate in steel as conductive metal precipitates, and contains an amount of C 0.012% or less in steel (in the present specification, the unit symbol "%" in chemical composition means "mass%" unless otherwise noted). In addition, Patent Documents 4 and 5 disclose polymer electrolyte fuel cells each of which applies a ferritic stainless steel causing none of such conductive metal precipitates to precipitate is applied as a separator.

Patent Document 6 discloses a ferritic stainless steel for separators of polymer electrolyte fuel cells that contains no B in steel but contains 0.01 to 0.15% of C (carbon) in steel, and causes only Cr carbides to precipitate, and discloses a polymer electrolyte fuel cell that applies the ferritic stainless steel.

Patent Document 7 discloses an austenitic stainless steel for separators of polymer electrolyte fuel cells that contains no B in steel but contains 0.015 to 0.2% of C in steel, contains 7 to 50% of Ni, and causes Cr carbides to precipitate.

Patent Document 8 discloses a stainless steel for separators of polymer electrolyte fuel cell in which one or more kinds of M23C6, M4C, M2C, and MC carbide-based metal inclusions, and M₂B metal borides having conductivities are dispersed or exposed on a stainless steel surface, and discloses a ferritic stainless steel containing C: 0.15% or less, Si: 0.01 to 1.5%, Mn: 0.01 to 1.5%, P: 0.04% or less, S: 0.01% or less, Cr: 15 to 36%, Al: 0.001 to 6%, and N: 0.035% or less, wherein the contents of Cr, Mo, and B satisfy 17% ≤ Cr + 3 × Mo - 2.5 × B, and the balance consists of Fe and inevitable impurities.

Patent Document 9 discloses a method for producing a stainless steel material for separators of polymer electrolyte fuel cell in which the surface of a stainless steel product is corroded using an acid aqueous solution, and one or more kinds of M23C6, M4C, M2C, MC carbide-based metal inclusions and M₂B metal borides having conductivities are exposed on the surface, and that contains C: 0.15% or less, Si: 0.01 to 1.5%, Mn: 0.01 to 1.5%, P: 0.04% or less, S: 0.01% or less, Cr: 15 to 36%, Al: 0.001 to 1%, B: 0 to 3.5%, N: 0.035% or less, Ni: 0 to 5%, Mo: 0 to 7%, Cu: 0 to 1%, Ti: 0 to 25 × (C% + N%), and Nb: 0 to 25 × (C% + N%), the contents of Cr, Mo, and B satisfy 17% ≤ Cr + 3 × Mo - 2.5 × B. Patent Document 9 also discloses a ferritic stainless steel material that includes the balance of Fe and impurities.

Patent Document 10 discloses a polymer electrolyte fuel cell in which M₂B metal borides are exposed on a surface, and assuming that the area of an anode and the area of a cathode are both one, an area in which the anode is in direct contact with a separator, and an area in which the cathode is in direct contact with the separator are both ratios from 0.3 to 0.7, and discloses a stainless steel in which one or more kinds of M23C6, M4C, M2C, MC carbide-based metal inclusions and M₂B metal borides having conductivities are exposed on a surface of the stainless steel. Patent Document 10 further discloses a ferritic stainless steel material in which a stainless steel constituting a separator contains C: 0.15% or less, Si: 0.01 to 1.5%, Mn: 0.01 to 1.5%, P: 0.04% or less, S: 0.01% or less, Cr: 15 to 36%, Al: 0.2% or less, B: 3.5% or less (excluding 0%), N: 0.035% or less, Ni: 5% or less, Mo: 7% or less, W: 4% or less, V: 0.2% or less, Cu: 1% or less, Ti: 25 × (C% + N%) or less, Nb: 25 × (C% + N%) or less, and the contents of Cr, Mo, and B satisfy 17% ≤ Cr + 3 × Mo - 2.5 × B.

Furthermore, Patent Documents 11 to 15 disclose austenitic stainless clad steel materials in which M₂B metal boride conductive metal precipitates are exposed on a surface, and methods for producing the austenitic stainless clad steel materials.

### LIST OF PRIOR ART DOCUMENTS

### PATENT DOCUMENT

Patent Document 1: JP10-228914A
Patent Document 2: JP8-180883A
Patent Document 3: JP3269479B
Patent Document 4: JP3097689B
Patent Document 5: JP3097690B
Patent Document 6: JP3397168B
Patent Document 7: JP3397169B
Patent Document 8: JP4078966B
Patent Document 9: JP3365385B
Patent Document 10: JP3888051B
Patent Document 11: JP3971267B
Patent Document 12: JP4155074B
Patent Document 13: JP4305031B
Patent Document 14: JP4613791B
Patent Document 15: JP5246023B

### SUMMARY OF INVENTION

### TECHNICAL PROBLEM

An objective of the present invention is to provide a polymer electrolyte fuel cell that is remarkably excellent in corrosion resistance in an environment of a polymer electrolyte fuel cell and has a contact electric resistance the same as that of a gold-plated material, and to provide a separator capable of being used for the polymer electrolyte fuel cell and a ferritic stainless steel material for the separator, as well as a method for producing the separator.

### SOLUTION TO PROBLEM

The present inventor has dedicated many years to develop stainless steel products that are hard to cause a decrease in catalyst capability and polymer film capability, the stainless steel products causing, even after a long-time use as a separator for polymer electrolyte fuel cells, extremely small metal dissolution from the surface of a metallic separator, and hardly allowing the progress of metal ion contamination of an MEA (the abbreviation of Membrane Electrode Assembly), which is constituted by a diffusion layer, a polymer film, and a catalyst layer.

Specifically, the present inventor has studied the application of conventional SUS304 and SUS316L, their gold-plating-treated materials, M₂B-conductive-metal-precipitate stainless materials or M₂₃C₆-conductive-metal-precipitate stainless materials, conductive-particulate-powder-applying-treated stainless materials or conductive-particulate-powder-coating-treated stainless materials, surface-modification-treated stainless materials, or the like to a fuel cell. As a result, the present inventor obtained the following findings (a) to (d) and accomplished the present invention.
(a) When a stainless steel product is subjected to spray etching using a ferrous chloride solution at 40° to 51° on the Baume scale and at a solution temperature of 30°C to 60°C, and is rinsed and subjected to drying immediately thereafter, the surface of the stainless steel product is roughened into a favorable state as a separator for polymer electrolyte fuel cells. It is the most preferable that the Baume degree of the ferrous chloride solution is 42 to 44°, and the solution temperature of the ferrous chloride solution is 32 to 37°C.
(b) When Sn and In are contained in steel, a metal Sn, a metal In, or their hydroxides or oxides are concentrated on the surface of a separator after etching and the surface of a separator in a cell in operation, which improves the conductivity of the surfaces and decreases a contact resistance value with a fuel cell diffusion layer that is made up of carbon fiber. This enables the stable improvement of fuel cell performance for a long term.
(c) Containing Si and Al in steel has an effect of improvement such that it promotes the concentration of a metal Sn, a metal In, or their hydroxides or oxides on an etched surface.
(d) By adding Mo (molybdenum) positively, a favorable corrosion resistance is secured. Mo has, even when dissolved, a relatively minor influence on the performance of a catalyst supported in anode and cathode parts. It is considered that this is because dissolved Mo is present in the form of a molybdate ion, which is an anion, and to have a small influence of hindering proton conductivity of a fluorocarbon-type ion-exchange resin membrane that includes a hydrogen ion (proton) exchange group. Similar behavior is expected from V (vanadium).

The present invention is as follows.
(1) A ferritic stainless steel material used for polymer electrolyte fuel cell separators, the ferritic stainless steel material having a chemical composition comprising, by mass%:
   C: 0.001 to 0.030%;
   Si: 0.20 to 1.5%;
   Mn: 0.01 to 1.5%;
   P: 0.035% or less;
   S: 0.01% or less;
   Cr: 22.5 to 35.0%;
   Mo: 0.01 to 6.0%;
   Ni: 0.01 to 6.0%;
   Cu: 0.01 to 1.0%;
   Sn: 0.10 to 2.5%;
   In: 0.001 to 1.0%;
   N: 0.035% or less;
   V: 0.01 to 0.35%;
   Al: 0.001 to 1.0%;
   REM: 0 to 0.1%;
   Nb: 0 to 0.35%;
   Ti: 0 to 0.35%; and
   the balance: Fe and inevitable impurities, wherein
   a calculated value of {Content of Cr (mass%) + 3 × Content of Mo (mass%)} is 22.5 to 45.0 mass%.
(2) The ferritic stainless steel material according to (1), wherein
   the chemical composition comprises
   REM: 0.003 to 0.1 %.
(3) The ferritic stainless steel material according to (1) or (2), wherein
   the chemical composition comprises
   Nb: 0.001 to 0.35% and/or
   Ti: 0.001 to 0.35%, and
   satisfies 3.0 ≤ Nb / C ≤ 25.0, 3.0 ≤ Ti / (C + N) ≤ 25.0.
(4) A separator used for polymer electrolyte fuel cells, the separator having any one of the chemical compositions according to (1) to (3).
(5) A polymer electrolyte fuel cell including the separator according to (4).
(6) A method for producing a separator for polymer electrolyte fuel cells, the method including:
   forming a sheet having any one of the chemical compositions according to (1) to (3) into a separator;
   thereafter, performing surface roughening by spray etching using a ferrous chloride solution at a Baume degree of 40° to 51° and a solution temperature from 30°C to 60°C; and
   immediately thereafter, performing rinsing and drying.
(7) A method for producing a separator used for a polymer electrolyte fuel cell, the method including:
   forming a sheet having the chemical composition according to any one of (1) to (3) into a separator;
   thereafter, performing surface roughening by spray etching using a ferrous chloride solution;
   immediately thereafter, performing rinsing;
   further performing spray pickling treatment or acid solution immersion treatment using a sulfuric acid aqueous solution at a concentration of less than 20% and at a temperature from a normal temperature to 60°C; and
   immediately thereafter, performing rinsing and drying.
(8) A method for producing a separator used for a polymer electrolyte fuel cell, the method including:
   forming a sheet having the chemical composition according to any one of (1) to (3) into a separator;
   thereafter, performing surface roughening by spray etching using a ferrous chloride solution;
   immediately thereafter, performing rinsing;
   further performing spray pickling treatment or acid solution immersion treatment using a nitric acid aqueous solution at a concentration of less than 40% and at a temperature from a normal temperature to 80°C; and
   immediately thereafter, performing rinsing and drying.

### ADVANTAGEOUS EFFECTS OF INVENTION

According to the present invention, there is provided a polymer electrolyte fuel cell that has a fuel cell performance the same of that of a cell to which a gold-plated member is applied, while dispensing with high cost surface treatment such as gold plating, which is expensive, in order for the reduction of the contact resistance of a surface. The reduction of the cost of fuel-cell bodies, in particular, the cost of separators extremely matters to the full-fledged proliferation of polymer electrolyte fuel cells. It is expected that the present invention accelerates the full-fledged proliferation of metallic-separator-applied polymer electrolyte fuel cells.

### BRIEF DESCRIPTION OF DRAWINGS

[Figure 1] Figure 1 is a schematic diagram illustrating the structure of a polymer electrolyte fuel cell, where Figure 1(a) is a exploded view of the fuel cell (single cell), and Figure 1(b) is a perspective view of the entire fuel cell.
[Figure 2] Figure 2 is a picture showing the shape of a separator produced in Example 2.

### DESCRIPTION OF EMBODIMENTS

A mode for carrying out the present invention will be described in detail. Note that all of unit symbols "%" used in the followings represents mass %.

### 1. Chemical Composition of Ferritic Stainless Steel

### (1-1) C: 0.001% or more and 0.030% or less

C (carbon) is an impurity existing in steel and allowed to be contained at up to 0.030%. Although it is possible, when the present refining technique is applied, to use the content of C less than 0.001%, it lengthens a refining time, leading to an increase in refining costs. Therefore, the content of C is set at 0.001% or more and 0.030% or less.

### (1-2) Si: 0.20% or more and 1.5% or less

Si (silicon) is an alloying element to be added positively. A content of Si of 0.20% or more is found to have the function of promoting the surface concentration of Sn and In in the present invention. A particularly desirable range of the content of Si is 0.25% or more. On the other hand, a content of Si more than 1.5% leads to a decrease in formability. Consequently, the content of Si is set at 0.20% or more and 1.5% or less.

### (1-3) Mn: 0.01% or more and 1.5% or less

Mn (manganese) has the property of immobilizing S (sulfur) in steel in the form of Mn sulfides and has an effect of improving hot workability. For this reason, the content of Mn is set at 0.01% or more and 1.5% or less. Containing more than 1.5% of Mn exhibits no further effect of the improvement.

### (1-4) P: 0.035% or less

P (phosphorus), as well as S (sulfur), in steel is a most harmful impurity. Therefore, the content of P is set at 0.035% or less. The lower the content of P is, the more preferably it is.

### (1-5) S: 0.01% or less

S (sulfur), as well as P, in steel is a most harmful impurity Therefore, the content of S is set at 0.01% or less. The lower the content of S is, the more preferable it is. Most of S precipitates in the form of Mn sulfides, Cr sulfides, Fe sulfides, or and composite nonmetallic precipitates with composite sulfides of these sulfides and composite oxides of these sulfides, depending on coexisting elements in steel and in proportion of the content of S in steel. In addition, S may form sulfides of REM that are added as necessary.

However, in the environment of a separator of a polymer electrolyte fuel cell, all nonmetallic precipitates having such compositions act as starting points of corrosion, while differing in degree, and thus have an adverse effect to maintaining a passivation film and suppressing the dissolution of metal ions. While the amount of S in steel in normal mass-produced steel is more than 0.005% and up to about 0.008%, the amount of S is preferably reduced to 0.004% or less to prevent the harmful influence described above. A more preferable amount of S in steel is 0.002% or less, and the most preferable level of the amount of S in steel is less than 0.001%. The lower the amount of S is, the more desirable it is.

With the present refining technique, making the amount of S less than 0.001% causes only a slight increase in producing costs even at an industrial mass-production level, and thus raises no problem in industrial production.

### (1-6) Cr: 22.5% or more and 35.0% or less

Cr (chromium) is a basic alloying element extremely important to secure the corrosion resistance of a base metal. The higher the content of Cr, the more excellent the resultant corrosion resistance is. In a ferritic stainless steel, a content of Cr more than 35.0% makes the production on a mass-production scale difficult. On the other hand, a content of Cr less than 22.5% makes a failure to secure a corrosion resistance necessary for a polymer electrolyte fuel cell separator even with the contents of the other elements changed.

### (1-7) Mo: 0.01% or more and 6.0% or less

Mo (molybdenum) has an effect of improving the corrosion resistance with a small quantity in comparison with Cr. Therefore, Mo is contained at 0.01% or more. Adding Mo more than 6.0% makes it impossible to avoid the precipitation of intermetallic compounds such as sigma phase in the middle of the production, which makes manufacturing difficult because of a problem of embrittlement of steel. For this reason, the upper limit of the content of Mo is set at 6.0%. In addition, Mo has the property of having a relatively minor influence on the performance of an MEA if Mo in steel is dissolved due to corrosion occurring inside the polymer electrolyte fuel cell. The reason for this property is that Mo is present not in the form of a metal cation but in the form of molybdate ions, which are anions, so that Mo has a little influence on the cation conductivity of a fluorocarbon-type ion-exchange resin membrane with a hydrogen ion (proton) exchange group.

### (1-8) Ni: 0.01% or more and 6.0% or less

Ni (nickel) has an effect of improving the corrosion resistance and a toughness. The upper limit of the content of Ni is set at 6.0%. A content of Ni more than 6% makes it difficult to produce a ferritic singe-phase steel micro structure even when thermal treatment is performed industrially. On the other hand, the lower limit of the content of Ni is set at 0.01%. The lower limit of the content of Ni is the amount of the impurity that is mixed when the separator is industrially produced.

### (1-9) Cu: 0.01% or more and 1.0% or less

Cu (copper) is contained at 0.01% or more and 1.0% or less. A content of Cu more than 1% leads to a decrease in hot workability, which makes it difficult to secure mass productivity In the stainless steel according to the present invention, Cu is present in a solid-solution state. When Cu precipitates precipitate, they serve as starting points of Cu dissolution in the cell, which leads to a decrease in fuel cell performance and is thus hazardous. Cu needs to exist in a solid-solution state.

### (1-10) N: 0.035% or less

In a ferritic stainless steel, N (nitrogen) is an impurity. N deteriorates the normal temperature toughness of the ferritic stainless steel, and thus the upper limit of the content of N is set at 0.035%. The lower the content of N is, the more desirable it is. Industrially, it is the most desirable to set the content of N at 0.007% or less. However, an excessive reduction of the content of N leads to an increase in melting costs. Thus, the content of N is preferably set at 0.001% or more.

### (1-11) V: 0.01% or more and 0.35% or less

V (vanadium) is not an element to be intentionally added but is inevitably contained in a Cr source that is added as a melted raw material in mass production. The content of V is set at 0.01% or more and 0.35% or less. V has an effect of improving the normal temperature toughness, although the effect is slim.

### (1-12) Al: 0.001% or more and 1.0% or less

Al (aluminum) is an alloying element to be added positively as deoxidation element and is added in a steel melting stage. For deoxidation, Al needs to be added at 0.001% or more. It is noted that an additive amount of Al of 0.05% or more has a function of promoting the concentration of Sn and In on the surface after etching. The most desirable additive amount of Al is 0.08% or more. The upper limit of the additive amount of Al is set at 1.0% at which no further effect of improvement is recognized.

### (1-13) Sn: 0.10% or more and 2.5% or less

Sn (tin) is an extremely important addition element. When Sn is contained within a range of 0.10% or more and 2.5% or less in a steel that contains a desired amount of In, Sn dissolved in the matrix in a parent phase of the steel is concentrated on the surface of the steel in a polymer electrolyte fuel cell in the form of a metal Sn or Sn oxides, so as to reduce the surface contact resistance of the parent phase, and stabilize and improve the electric contact resistance performance of the parent phase as high as that of a gold-plated starting material. Sn also has an effect of remarkably inhibiting the dissolution of metal ions from the parent phase.

When the content of Sn is less than 0.10%, such an effect cannot be obtained, and when the content of Sn is more than 2.5%, the productivity significantly decreases. For this reason, when Sn is contained, the content of Sn is set at 0.10% or more and 2.50% or less. A preferable lower limit of the content of Sn is 0.25%, and a preferable upper limit of the content of Sn is 1.0%.

### (1-14) In: 0.001% or more and 1.0% or less

In (indium) is one of the rare metals and a very expensive addition element. In as well as Sn has an effect of reducing surface contact resistance and thus is an important addition element. A content of In less than 0.001% results in an unclear effect by adding In in the present of Sn. On the other hand, containing In at more than 1.0% results in a poor mass productivity Therefore, In is contained within a range of 0.001% or more and 1.0% or less. A preferable lower limit of the content of In is 0.02%, and a preferable upper limit of the content of In is 0.5%.

### (1-15) REM: 0 to 0.1%

REM(Rare earth metal(s)) are optional addition elements and are added in the form of a misch metal. REM have an effect of improving hot productivity. Therefore, REM may be contained. When REM are to be contained, the upper limit of the content thereof is set at 0.1%. A preferable lower limit of the content of REM is 0.003%. When the content of REM is less than 0.003%, the effect by the addition cannot be obtained.

### (1-16) Calculated value of {Content of Cr (mass%) + 3 × Content of Mo (mass%)}: 22.5% or more and 45.0% or less

This value is an index that indicates, as a guide, the corrosion resistant behavior of a ferritic stainless steel in the present invention. This value is set at 22.5% or more and 45.0 mass% or less. When this value is less than 22.5%, the corrosion resistance in the polymer electrolyte fuel cell cannot be secured sufficiently, causing the amount of metal ion dissolution to increase. On the other hand, when this value is more than 45.0 mass%, the mass productivity significantly deteriorates.

### (1-17) Nb: 0.35% or less and/or Ti: 0.35% or less, and 3 ≤ Nb / C ≤ 25, 3 ≤ Ti / (C + N) ≤ 25

Ti (titanium) and Nb (niobium) are both optional addition elements and are elements that stabilize C and N in steel. Ti and Nb form their carbides and nitrides in steel. For this reason, both of Ti and Nb may be contained at 0.35% or less, as necessary. For both of the elements, preferable lower limits of contents thereof are 0.001%. Nb is contained so that the value of (Nb / C) becomes 3 or more and 25 or less, and Ti is contained so that the value of {Ti / (C + N)} becomes 3 or more and 25 or less.

Besides the above elements, the balance consists of Fe and inevitable impurities. The ferritic stainless steel material can be used for a separator of a polymer electrolyte fuel cell. The separator can be used for polymer electrolyte fuel cells.

### 2. Method for Producing Separator

### (2-1) Metal Sn and Its Oxides

Sn is added as an alloying element in a steel melting stage to be uniformly dissolved in the matrix in the parent phase of steel. In order to be applied as a polymer electrolyte fuel cell separator, the surface of a ferritic stainless steel for polymer electrolyte fuel cell separators according to the present invention is roughened by spray etching using a ferrous chloride solution, and immediately thereafter subjected to rinsing and drying treatment.

At this point, Sn that is solid-solved in steel is concentrated in the outer layer in the form of a metal Sn or concentrated on the surface in the form of its hydroxides or oxides (hereinafter, will be collectively referred to as "Sn oxides"), through parent phase dissolution (corrosion) by the pickling.

Furthermore, immediately after the start of using the separator as a polymer electrolyte fuel cell separator, very slow dissolution of metals proceeds in accordance with an in-fuel-cell environment, which causes a passivation film of the separator to alter. In the process, Sn displays a behavior in which Sn in steel is further concentrated on the surface in the form of Sn oxides along with the dissolution of the parent phase, which gives rise to a state of the surface that is suitable to secure desired properties. Both of the metal Sn and the Sn oxides are excellent in conductivity and perform the function of reducing the electric contact resistance of the surface of a parent phase in a fuel cell.

In addition, as another mode, Sn in the parent phase has a behavior such that Sn is concentrated in the outer layer in the form of a metal Sn or Sn oxides as the parent phase is dissolved (corrosion) by the sulfuric acid aqueous solution, when the surface of the stainless steel is rinsed immediately after the spray etching using a ferrous chloride solution, thereafter subjected to spray cleaning or acid solution immersion treatment using a sulfuric acid aqueous solution, and rinsed. The degree of the concentration in the surface is higher than in the case where only the spray etching using a ferrous chloride solution is performed.

### (2-2) Metal In and Its Oxides

In is a rare metal and a very expensive metal. When In is added together with Sn, In is concentrated on the surface together with the metal Sn or the Sn oxides described above.

In, or its hydroxides or oxides (hereinafter, will be collectively referred to as "In oxides") have the property of being excellent in conductivity in comparison with Sn and the Sn oxides and have a further contact resistance effect of improvement in comparison with the case where Sn is added alone.

When spray cleaning or acid solution immersion treatment using a sulfuric acid aqueous solution is performed after spray etching using a ferrous chloride solution, the effect of improving contact resistance by the effect by the coexistence of a metal Sn and Sn oxides is recognized in an overlaying manner.

### (2-3) Si and Al

When Si and Al are added in molten steel, part of them precipitate in the molten steel in the form of their oxides, float to the surface, and are separated because they have high bonding strengths with oxygen. Meanwhile, the residual portion is melted in the steel, most of which is dissolved in the matrix. Both Si and Al have an effect of promoting the surface concentration of Sn and In in the present invention. In particular, the promoting effect is recognized with Si at 0.25% or more, or Al at 0.05% or more.

The reason for the promoting effect is not entirely clear at the present time. However, it is understood that Si and Al in steel have the function of lowering the corrosion potential of a ferritic stainless steel in a ferrous chloride solution as well as a sulfuric acid aqueous solution, and a lowered surface potential facilitates the surface concentration of Sn and In in the form of their metals or their oxides.

### (2-4) Spray Etching Using Ferrous Chloride Solution

A ferrous chloride solution is widely used as an etchant of stainless steels also in the industrial field. Normally, in many cases, etching is performed on a masked metallic starting material, so as to locally reduce thickness or create through-holes. However, in the present invention, the etching is employed as treatment for roughening the surface and as a treatment method for concentrating Sn and In in the surface.

The surface roughening improves wettability to water generated in the fuel cell when the ferritic stainless steel is applied as a fuel cell separator, improving the properties of discharging water outside the cell. The ferrous chloride solution to be used is an aqueous solution at a very high concentration.

The concentration of the ferrous chloride solution is determined on the Baume scale, which is determined in the form of a reading measured by a Baume's hydrometer. Although the etching may be performed by immersing a separator in ferrous chloride solution in a settled state or by immersing a separator in flowing ferrous chloride solution, the most preferable treatment method is to perform spray etching to roughen the surface.

This is because the spray etching makes it easy to control a depth of etching, an etching rate, and a degree of roughening the surface with high efficiency and high precision, in production on an industrial scale. Spray etching can be controlled by the ejection pressure of a nozzle, the amount of solution, the flow rate (linear flow rate) of solution on the surface of an etching starting material, the hitting angle of spray, and the temperature of solution. In water cleaning and drying treatment performed after the treatment, Sn and In come to be concentrated on the outer layer in the form of a metal Sn and a metal In, or in the form of Sn oxides and In oxides.

### (2-5) Spray Cleaning and Immersion Treatment using Sulfuric Acid Aqueous Solution

Spray cleaning and immersion treatment using a sulfuric acid aqueous solution have an effect of increasing the amounts of a metal Sn, a metal In, Sn oxides, and In oxides concentrated on the surface. The ferrous chloride solution used in the previous step is very low in pH and high in flow velocity, so that Sn and In are rather in the state that makes them difficult to be concentrated on the surface.

The spray cleaning and immersion treatment in the present invention, which uses a sulfuric acid aqueous solution at less than 20%, is performed in the state where a solution flow rate is lower than the solution flow rate (linear flow rate) on the surface of the etching starting material in the spray cleaning using the ferrous chloride solution, or performed in the state where the sulfuric acid aqueous solution is nearly settled. This is because such states promote the concentration of Sn oxides and In oxides on the surface. In the water cleaning and drying treatment performed after the treatment, Sn and In are concentrated on the outer layer in the form of a metal Sn and a metal In, or in the form of Sn oxides and In oxides, forming a stabile outer-layer coating film.

### (2-6) Spray Cleaning and Immersion Treatment using Nitric Acid Aqueous Solution

Spray cleaning and immersion treatment using a nitric acid aqueous solution have an effect of increasing the amounts of a metal Sn, a metal In, Sn oxides, and In oxides concentrated on the surface. Since the ferrous chloride solution used in the previous step is very low in pH and high in flow velocity, Sn and In are rather in the state that makes them difficult to be concentrated on the surface.

The spray cleaning and immersion treatment in the present invention, which uses a nitric acid aqueous solution at less than 40%, is performed in the state where a solution flow rate is lower than the solution flow rate (linear flow rate) on the surface of the etching starting material in the spray cleaning using the ferrous chloride solution, or performed in the state where the sulfuric acid aqueous solution is nearly settled. This is because such states promote the concentration of Sn oxides and In oxides on the surface. In the water cleaning and drying treatment performed after the treatment, Sn and In are concentrated on the outer layer in the form of a metal Sn and a metal In, or in the form of Sn oxides and In oxides, forming a stabile outer-layer coating film.

### (2-7) Ferrous Chloride Solution

The ferrous chloride solution is desirably low in the concentration of Cu ion and the concentration of Ni (nickel) ion in the solution, and there is no problem with using a ferrous chloride solution product for industrial use normally available in Japan. The concentration of the ferrous chloride solution used in the present invention is a solution at 40° or higher and 51° or lower on the Baume scale. A concentration of the ferrous chloride solution less than 40° accelerates perforation corrosion tendency, which is unsuitable for roughening the surface. On the other hand, a concentration of the ferrous chloride solution more than 51° makes the etching rate remarkably low and also makes the deterioration rate of the solution high. Such a concentration is unsuitable for a treatment liquid for roughening the surface of a polymer electrolyte fuel cell separator necessary to be produced in volume.

In the present invention, the concentration of the ferrous chloride solution is set at 40° or higher and 51° or lower on the Baume scale, and a particularly preferable concentration of the ferrous chloride solution is 42° or higher and 46° or lower.

The temperature of the ferrous chloride solution is set at 30°C or higher and 60°C or lower. A decrease in the temperature of the ferrous chloride solution causes the etching rate to decrease, and an increase in the temperature of the ferrous chloride solution causes the etching rate to increase. A high temperature of the ferrous chloride solution also causes the deterioration of the solution to progress in a short time. The degree of the deterioration of the solution can be continuously determined and evaluated by measuring the rest potential of a platinum plate immersed in the ferrous chloride solution. Simple methods for recovering the capability of the deteriorating solution include adding some more new solution to the solution and changing the entire solution with new solution. A chlorine gas may be blown into the deteriorating solution. As for the surface roughness after etching, 3 µm or smaller in Ra value, a surface roughness index defined in JIS, suffices. When roughened, the surface improves its wettability and comes into a surface state that is suitable as a polymer electrolyte fuel cell separator. The effect of reducing the electric surface contact resistance by the surface roughening is also noticeable.

After the etching using the ferrous chloride solution, it is necessary to force the surface to be cleaned with a large quantity of clean water, immediately. This is for washing away surface deposits (precipitates) originating from the diluted ferrous chloride solution using the cleaning water. It is desirable to perform spray cleaning, which allows a flow velocity to be increased on the surface of the starting material. In addition, it is desirable to employ, together with the spray cleaning, cleaning in which the surface is immersed in flowing water after the spray cleaning.

In the cleaning and drying process performed thereafter, various metallic chlorides and metallic hydroxides adhered on the surface turn into more stable metals, or their oxides in the atmosphere. For that matter, Sn and In, playing the important role in the present invention, turn into a metal Sn and a metal In, or their oxides. All of the metals and the compounds have conductivities and are present on the surface in their concentrated state, performing the function of reducing the surface contact resistance in the present invention.

### (2-8) Spray Cleaning and Immersion Treatment using Sulfuric Acid Aqueous Solution

The concentration of the sulfuric acid aqueous solution to be applied differs in accordance with the corrosion resistances of a starting material to be treated. The concentration is adjusted to a corrosiveness of such a degree at which bubbles is observed starting to form on the surface when the separator is immersed. Such a condition of the concentration that causes bubbles to heavily form with corrosion is undesirable. Such a concentration condition hinders Sn and In, playing the important role in the present invention, from being concentrated on the surface in the form of a metal Sn and a metal In, or their oxides, which provides an insufficient function of reducing the surface contact resistance immediately after the application to a polymer electrolyte fuel cell.

However, the upper limit of the concentration is set at 20%. On the other hand, the lower limit of the concentration is desirably 4 or lower in pH value. This is because, when the concentration is more than 4 in pH value, the effect of the treatment is unrecognizable, and when the concentration is more than 20%, the sulfuric acid aqueous solution becomes difficult to handle and does not provide a sufficient performance.

The temperature of the sulfuric acid aqueous solution is adjusted to a temperature from a normal temperature to not higher than 60°C. When the temperature is higher than 60°C, the sulfuric acid aqueous solution becomes difficult to handle industrially and at the same time, the corrosiveness thereof becomes too strong to perform control to a desired surface.

### (2-9) Spray Cleaning and Immersion Treatment using Nitric Acid Aqueous Solution

The concentration of the nitric acid aqueous solution to be applied differs in accordance with the corrosion resistances of a starting material to be treated. The concentration is adjusted to a corrosiveness of such a degree at which bubbles is observed starting to form on the surface when the separator is immersed. Such a condition of the concentration that causes bubbles to heavily form with corrosion is undesirable. Such a concentration condition hinders Sn and In, playing the important role in the present invention, from being concentrated on the surface in the form of a metal Sn and a metal In, or their oxides, which provides an insufficient function of reducing the surface contact resistance immediately after the application to a polymer electrolyte fuel cell.

However, the upper limit of the concentration is set at 40%. On the other hand, the lower limit of the concentration is desirably 4 or lower in pH value. This is because, when the concentration is more than 4 in pH value, the effect of the treatment is unrecognizable, and when the concentration is more than 40%, the sulfuric acid aqueous solution becomes difficult to handle and does not provide a sufficient performance.

The temperature of the nitric acid aqueous solution is adjusted to a temperature from a normal temperature to not higher than 80°C. When the temperature is higher than 80°C, the nitric acid aqueous solution becomes difficult to handle industrially and at the same time, the corrosiveness thereof becomes too strong to perform control to a desired surface.

Next, the effects of the present invention will be described specifically referring to examples.

### EXAMPLE

### Example 1

Steel materials 1 to 18 having the chemical compositions shown in Table 1 were melted in a 180-kg vacuum furnace and made into flat ingots each having a maximum thickness of 80 mm. The steel material 18 is equivalent to SUS316L, a commercially available austenitic stainless steel.

The steel materials 1 to 12 in Table 1 are example embodiments of the present invention, and the steel materials 13 to 18 are comparative examples. In Table 1, each underline indicates that an underlined value falls out of the range defined in the present invention, REM represents a misch metal (rare earth metals), and Index (mass %) values are values of (Cr mass % + 3 × Mo mass %).

**[Table 1]**

| Steel material | | C | Si | Mn | P | S | Cr | Mo | Ni | Cu | N | V | Sn | In | Al | Ti, Nb | REM | Index |
|---|---|---|---|---|---|---|---|---|---|---|---|---|---|---|---|---|---|---|
| 1 | Inventive Example | 0.002 | 0.26 | 0.15 | 0.021 | 0.001 | 26.1 | 0.10 | 0.10 | 0.06 | 0.006 | 0.08 | 0.18 | 0.82 | 0.33 | 0.19Nb | - | 26.4 |
| 2 | Inventive Example | 0.002 | 0.25 | 0.15 | 0.022 | 0.001 | 26.2 | 2.08 | 0.09 | 0.03 | 0.005 | 0.08 | 0.29 | 0.09 | 0.10 | 0.18Nb | - | 32.4 |
| 3 | Inventive Example | 0.003 | 0.25 | 0.16 | 0.021 | 0.001 | 26.0 | 2.04 | 0.10 | 0.04 | 0.004 | 0.08 | 0.39 | 0.09 | 0.09 | 0.20Nb | - | 32.1 |
| 4 | Inventive Example | 0.002 | 0.26 | 0.15 | 0.022 | 0.001 | 26.1 | 2.08 | 0.09 | 0.03 | 0.003 | 0.07 | 0.51 | 0.09 | 0.08 | 0.20Nb | - | 32.3 |
| 5 | Inventive Example | 0.004 | 0.26 | 0.49 | 0.021 | 0.001 | 26.2 | 2.10 | 0.10 | 0.05 | 0.006 | 0.08 | 0.61 | 0.10 | 0.10 | 0.21Nb | - | 32.5 |
| 6 | Inventive Example | 0.004 | 0.78 | 0.48 | 0.022 | 0.001 | 28.1 | 2.11 | 0.11 | 0.06 | 0.006 | 0.08 | 0.80 | 0.09 | 0.06 | 0.20Ti | - | 34.4 |
| 7 | Inventive Example | 0.003 | 0.82 | 0.50 | 0.026 | 0.002 | 28.2 | 2.09 | 0.25 | 0.12 | 0.005 | 0.09 | 0.78 | 0.21 | 0.05 | 0.21Ti | - | 34.5 |
| 8 | Inventive Example | 0.004 | 0.81 | 0.48 | 0.026 | 0.002 | 28.3 | 2.08 | 0.26 | 0.12 | 0.007 | 0.09 | 0.81 | 0.39 | 0.05 | 0.20Ti | - | 34.5 |
| 9 | Inventive Example | 0.003 | 0.81 | 0.49 | 0.022 | 0.001 | 28.1 | 2.02 | 0.25 | 0.12 | 0.006 | 0.08 | 0.79 | 0.51 | 0.08 | 0.20Ti | - | 34.2 |
| 10 | Inventive Example | 0.002 | 1.22 | 0.50 | 0.026 | 0.001 | 28.1 | 4.00 | 0.22 | 0.10 | 0.008 | 0.08 | 0.36 | 0.09 | 0.08 | - | 0.020 | 40.1 |
| 11 | Inventive Example | 0.002 | 1.21 | 0.55 | 0.024 | 0.001 | 28.3 | 4.03 | 4.01 | 0.58 | 0.007 | 0.08 | 0.35 | 0.11 | 0.08 | - | - | 40.4 |
| 12 | Inventive Example | 0.002 | 1.45 | 1.40 | 0.025 | 0.001 | 30.2 | 2.21 | 0.09 | 0.08 | 0.006 | 0.10 | 2.42 | 0.31 | 0.81 | 0. 14Ti 0.21Nb | 0.017 | 36.8 |
| 13 | Comparative example | 0.003 | 0.25 | 0.31 | 0.026 | 0.001 | 18.8 | 0.002 | 0.08 | 0.03 | 0.004 | 0.05 | 0.002 | 0.0001 | 0.010 | 0.23Nb | - | 18.8 |
| 14 | Comparative example | 0.003 | 0.25 | 0.15 | 0.022 | 0.001 | 26.0 | 2.08 | 0.09 | 0.03 | 0.004 | 0.08 | 0.001 | 0.0001 | 0.08 | 0.21Nb | - | 32.2 |
| 15 | Comparative example | 0.003 | 0.26 | 0.16 | 0.021 | 0.001 | 26.1 | 2.03 | 0.11 | 0.03 | 0.004 | 0.06 | 0.08 | 0.0001 | 0.08 | 0.22Nb | - | 32.2 |
| 16 | Comparative example | 0.005 | 0.25 | 0.15 | 0.022 | 0.001 | 28.2 | 2.02 | 0.10 | 0.04 | 0.005 | 0.08 | 0.08 | 0.0008 | 0.08 | 0.20Ti | - | 32.3 |
| 17 | Comparative example | 0.002 | 0.24 | 0.15 | 0.023 | 0.001 | 28.1 | 2.01 | 0.11 | 0.03 | 0.004 | 0.05 | 0.08 | 0.0003 | 0.08 | - | - | 34.1 |
| 18 | Comparative example | 0.021 | 0.51 | 0.81 | 0.018 | 0.003 | 17.88 | 2.21 | 7.88 | 0.34 | 0.145 | 0.12 | 0.002 | 0.0001 | 0.007 | - | - | 24.5 |

The casting surface of each ingot was removed by machinework. Each ingot was then heated and soaked in a city-gas burner-combustion heating furnace heated at 1180°C, and forged into a slab for hot rolling having a thickness of 60 mm and a width of 430 mm, with the surface temperature of the ingot being within a temperature range from 1160°C to 870°C.

From the slab having a thickness 60 mm and a width of 430 mm, a surface defect was ground to be removed as hot processing, with the surface temperature of the slab kept at 300°C or higher. Thereafter, the slab was loaded into a city-gas heating furnace heated at 1130°C, then heated, and soaked for two hours.

Thereafter, the slab was subjected to hot rolling by a 4-high hot rolling mill to have a thickness of 2.2 mm, wound into a coil shape, and left to be cooled down to a room temperature. When the hot-rolled slab was wound into a coil shape, forced water cooling was performed by water spraying. At the time of being wound, the surface temperature of the starting material was set at 400°C or lower.

The hot rolled coil material was subjected to annealing at 1060°C for 150 seconds in a continuous coil annealing line, and cooled by forced air cooling. Thereafter, the hot rolled coil material was subjected to surface oxide scale removing with shot, was further descaled by being immersed in a nitric-hydrofluoric acid solution containing 8% of nitric acid + 6% of hydrofluoric acid and heated to 60°C, and was made into a starting material for cold rolling.

The cold rolled starting material was subjected to slit working to have a coil width of 400 mm, and thereafter finished into a cold rolled coil having a thickness of 0.116 mm and a width of 400 mm, by Sendzimir 20-high cold rolling mill.

Final annealing was performed in a bright annealing furnace with an atmosphere containing 75 vol% H₂ and 25 vol% N₂ and having a dew point adjusted to -50 to -53°C. The heating temperature in a soaking zone was 1130°C for the steel materials 18, which was austenitic, and 1030°C for all of the other steel materials.

In all of the steel materials 1 to 18, no noticeable end face crack, coil rupture, coil surface flaw, or coil perforation was observed in the present prototype process. The steel micro structure of all steel material but steel material 18 was a ferrite single phase. The precipitation of Sn intermetallic compounds or Cu-intermetallic compounds was not confirmed.

Each steel material was cleaned after a bright annealing oxide film on the surface of the steel material was removed by polishing with 600-grit emery paper, and was subjected to intergranular corrosion resistance evaluation by the copper sulfate-sulfuric acid test according to JIS-G-0575. No crack occurred in the steel materials 1 to 18. Therefore, it was determined that the steel materials 1 to 17 do not cause intergranular corrosion to occur even when applied in a fuel cell environment.

From the steel materials 1 to 18 shown in Table 1, cutlength sheets each having a thickness of 0.116 mm, a width of 400 mm, and a length of 300 mm were taken, and each was subjected to the spray etching using a ferrous chloride solution at 35°C and 43° Baume in such a manner that the treatment was simultaneously performed on the entire upper and lower surfaces of the cutlength sheet. The etching was performed by spraying for a time period of about 40 seconds. Adjustment was made by strip running speed. An amount of scarfing was set at 5 µm for each side.

Immediately after the spray etching, spray cleaning using clean water, immersion cleaning in clean water, and drying treatment using an oven were successively performed. After the drying treatment, a 60 mm square sample was cut out from each starting material I and referred to as a starting material I.

In addition, as above, each starting material I was subjected to the spray etching using the ferrous chloride solution, immediately followed by the spray cleaning using clean water and the immersion cleaning in cleaning water. Thereafter, the starting material I was uninterruptedly subjected to the spray cleaning using 10% sulfuric acid aqueous solution at a solution temperature of 35°C, followed by the spray cleaning using clean water and further followed by the immersion cleaning, successively without performing the drying treatment, and was referred to as a starting material II. The temperature of the cleaning water was 18°C.

In addition, as above, each starting material I was subjected to the spray etching using the ferrous chloride solution, immediately followed by the spray cleaning using clean water and the immersion cleaning in cleaning water. Thereafter, the starting material I was uninterruptedly subjected to the spray cleaning using 30% nitric acid aqueous solution at a solution temperature of 35°C, followed by the spray cleaning using clean water and further followed by the immersion cleaning, successively without performing the drying treatment, and was referred to as a starting material III. The temperature of the cleaning water was 18°C.

The measurement of an electric surface contact resistance was performed while a starting material for evaluation is sandwiched by carbon paper TGP-H-90 from Toray Industries, Inc. that is sandwiched between platinum plates. The method for the measurement is a four-terminal method, which is generally used in the evaluation of a separator for fuel cells. An applied load in the measurement was set at 10 kgf/cm². A lower measured value means a smaller IR loss in generating electric power as well as a smaller energy loss in heat generation, which was determined to be favorable. The carbon paper TGP-H-90 from Toray Industries, Inc. was changed every measurement.

Table 2 collectively shows the results of comparing the electric surface contact resistance performances of all the starting materials, and Table 3 collectively shows the amounts of ions that were dissolved in the sulfuric acid aqueous solution for the in-cell environment simulation containing 100 ppm F-ion and having a pH of 4 after the starting materials were immersed in the sulfuric acid aqueous solution for 500 hours. In the measurement of metal ion dissolution in terms of the amount of dissolved metal ions in the fuel cell, Cr ions, Mo ions, Sn ions, In ions, and the like are determined at the same time, but the amounts thereof were very small. Therefore, the amounts are shown as the corrosion behavior of a starting material expressed in terms of an amount of Fe ions, which are the largest amount of dissolution and have a significant influence on the cell performance. The number of starting material tests was two for all starting materials.

A steel material 19 in Tables 2 and 3 was a comparative example that was obtained by subjecting the steel material 18 to gold plating with a thickness of 50 nm.

**[Table 2]**

| Steel material | | Electric surface contact resistance (mΩ cm²): applied load was 10kgf/cm² | | | |
|---|---|---|---|---|---|
| | | Starting material I | Starting material II | Starting material III (treated starting material I) | Starting material iv for measurement (treated starting material II) |
| | | : surface after spray etching using 43° baume ferrous chloride solution | : surface after spray cleaning using pH 3 sulfuric acid aqueous solution + cleaning using clean water | : surface after in-cell environment simulation 100 ppm F-containing pH 4.8 sulfuric acid aqueous solution, 90°C, teflon holder put obliquely, 500 hrs immersion | : surface after in-cell environment simulation 100 ppm F-containing pH 4.8 sulfuric acid aqueous solution, 90°C, teflon holder put obliquely, 500 hrs immersion |
| 1 | Inventive Example | 12,12 | 3,4 | 6,7 | 3,4 |
| 2 | Inventive Example | 14,15 | 3,4 | 5,6 | 3,4 |
| 3 | Inventive Example | 13,14 | 3,3 | 6,7 | 3,4 |
| 4 | Inventive Example | 13,13 | 2,3 | 5,6 | 2,3 |
| 5 | Inventive Example | 12,12 | 3,3 | 5,5 | 2,3 |
| 6 | Inventive Example | 15,16 | 2,3 | 5,6 | 2,3 |
| 7 | Inventive Example | 13,14 | 2,3 | 5,5 | 2,3 |
| 8 | Inventive Example | 12,13 | 2,2 | 4,5 | 2,2 |
| 9 | Inventive Example | 12,12 | 2,2 | 4,5 | 2,2 |
| 10 | Inventive Example | 13,13 | 3,3 | 5,6 | 3,4 |
| 11 | Inventive Example | 13,14 | 3,3 | 5,6 | 2,3 |
| 12 | Inventive Example | 11,12 | 2,2 | 4,5 | 2,2 |
| 13 | Comparative example | 89,96 | 73,84 | 102,110 | 123,138 |
| 14 | Comparative example | 73,78 | 68,68 | 87,93 | 83,87 |
| 15 | Comparative example | 66,68 | 62,61 | 143,165 | 121,134 |
| 16 | Comparative example | 54,55* | 62,63 | 85,91 | 82,95 |
| 17 | Comparative example | 55,56* | 63,64 | 125,131 | 112,127 |
| 18 | Comparative example | 52,55* | 41,46 | 136,186 | 92,102 |
| 19 | Comparative example | 2,2 | | 2,2 | 2,2 |

**[Table 3]**

| Steel material | | Starting material III (treated starting material I) | Starting material IV (treated starting material II) |
|---|---|---|---|
| | | : iron ion concentration in immersion solution after in-cell environment simulation 100 ppm F-containing pH 4 sulfuric acid aqueous solution, 90°C, teflon holder put obliquely, 500 hrs immersion (ppb) | : iron ion concentration in immersion solution after in-cell environment simulation 100 ppm F-containing pH 4 sulfuric acid aqueous solution, 90°c, teflon holder put obliquely 500 hrs immersion (ppb) |
| | | : two 60 mm square specimen immersed, solution volume 800 ml | : two 60 mm square specimen immersed, solution volume 800 ml |
| 1 | Inventive Example | 82 | 78 |
| 2 | Inventive Example | 46 | 48 |
| 3 | Inventive Example | 55 | 51 |
| 4 | Inventive Example | 53 | 46 |
| 5 | Inventive Example | 37 | 32 |
| 6 | Inventive Example | 35 | 33 |
| 7 | Inventive Example | 32 | 28 |
| 8 | Inventive Example | 35 | 29 |
| 9 | Inventive Example | 32 | 30 |
| 10 | Inventive Example | 31 | 32 |
| 11 | Inventive Example | 28 | 28 |
| 12 | Inventive Example | 31 | 30 |
| 13 | Comparative example | 1350 | 1250 |
| 14 | Comparative example | 1290 | 1180 |
| 15 | Comparative example | 1310 | 1250 |
| 16 | Comparative example | 1450 | 1325 |
| 17 | Comparative example | 1503 | 1361 |
| 18 | Comparative example | 1445 | 1330 |
| 19 | Comparative example | 34 | 31 |

As shown in Tables 2 and 3, when compared with comparative examples 13 to 18, which contained no Sn nor In, or contained Sn and In in only amounts as small as below the lower limits of the contents specified in the present invention, example embodiments of the present invention 1 to 12, containing Sn and In, were recognized to be low in electric contact resistance value and to have a tendency to be significantly low in amount of Fe ions dissolved in the solution after the immersion test. The example embodiments of the present invention 1 to 12 are suitable for as separator starting materials for polymer electrolyte fuel cells that are excellent in power generation performance and also excellent in durability. The small amount of Fe ions by the steel material 19, a gold-plated material, was due to a surface cover effect by gold, which is excellent in corrosion resistance.

The starting material surfaces under each condition and those after the immersion test were analyzed, with the result that the hydroxides and oxides of Sn and In were confirmed to have a noticeable tendency to be concentrated on the starting material surfaces in the order of starting materials I < starting materials II < starting materials III, while suffering the influence of their solubilities in the steels. The tendency was in correlation with the comparisons of the electric contact resistances shown in Table 2.

As the result of the in-fuel-cell simulate environment evaluation, it is clear that the effect of adding Sn and In is clearer when the surfaces is exposed to an acid environment by sulfuric acid or an acid environment by nitric acid than when the surfaces is exposed to a ferrous chloride solution environment, which is an acid environment by hydrochloric acid. However, the environment in an actual polymer electrolyte fuel cell is an acid environment by sulfuric acid at a pH of about 3 to 6. This is one of the environments in which the ferritic stainless steel for polymer electrolyte fuel cell separators according to the present invention is most corrosion-resistive, and is a suitable environmental condition that makes the concentration of Sn and In noticeable. Thus, the effect of applying the inventive steels can be expected.

### Example 2

Using the coil starting materials produced in Example 1, separators having a shape illustrated by a picture in figure 2 were produced by press forming, and then application evaluation was performed in an actual fuel cell. The area of a channel portion including a channel in a serpentine shape was 100 cm². Surface adjustment was performed in such a manner as to perform surface roughening by spray etching using a ferrous chloride solution, perform rinsing immediately thereafter, further perform spray pickling treatment and immersion treatment using a 10% sulfuric acid aqueous solution at 35°C, and perform rinsing and drying treatment immediately thereafter. The surface treatment condition was equivalent to the surface adjustment method for the starting material II shown in Tables 2 and 3.

The condition specified for evaluating fuel cell operation was constant-current operation evaluation at a current density of 0.1 A/cm², which is one of the operation environments of residential fuel cells. A hydrogen-oxygen utilization was set to be constant at 40%. The time period of the evaluation was 1000 hours. The concentrations of Fe ions are evaluation-measured values at the time when the operation of the fuel cell for 1000 hours was finished. Table 4 collectively shows the results of evaluation.

**[Table 4]**

| Steel material | | Cell resistance value (mΩ) behavior in single-cell fuel cell operation | | Concentration of Fe ion in cathode electrode outlet gas condensate in fuel cell stack) (ppb) | Concentration of Fe ion in anode-electrode-side outlet gas condensate in fuel cell stack (ppb) | Concentration of Fe ion in MEA polymer film after operation end (µg/100 cm²) |
|---|---|---|---|---|---|---|
| | | : constant-current operation at 0.1 mA/cm², gas usage rate: 40% | | | | |
| | | 50 hrs from operation start | 500 hrs from operation start | | | |
| 1 | Inventive Example | 0.698 | 0.753 | 2.1 | 26 | 64 |
| 2 | Inventive Example | 0.692 | 0.749 | 2.2 | 28 | 62 |
| 3 | Inventive Example | 0.706 | 0.752 | 2.0 | 24 | 62 |
| 4 | Inventive Example | 0.689 | 0.747 | 2.1 | 22 | 64 |
| 5 | Inventive Example | 0.693 | 0.753 | 2.2 | 22 | 62 |
| 6 | Inventive Example | 0.687 | 0.745 | 2.3 | 20 | 60 |
| 7 | Inventive Example | 0.682 | 0.748 | 2.4 | 21 | 60 |
| 8 | Inventive Example | 0.688 | 0.748 | 2.2 | 21 | 58 |
| 9 | Inventive Example | 0.683 | 0.751 | 2.2 | 20 | 62 |
| 10 | Inventive Example | 0.698 | 0.748 | 2.0 | 24 | 60 |
| 11 | Inventive Example | 0.688 | 0.742 | 2.0 | 22 | 62 |
| 12 | Inventive Example | 0.684 | 0.744 | 2.0 | 23 | 64 |
| 13 | Comparative example | 1.546 | 2.342 | 10.2 | 110 | 126 |
| 14 | Comparative example | 1.542 | 2.568 | 12.4 | 108 | 148 |
| 15 | Comparative example | 1.552 | 2.464 | 16.2 | 126 | 136 |
| 16 | Comparative example | 1.562 | 2.534 | 12.6 | 118 | 142 |
| 17 | Comparative example | 1.573 | 2.552 | 12.8 | 123 | 152 |
| 18 | Comparative example | 1.568 | 2.551 | 12.8 | 110 | 153 |
| 19 | Comparative example | 0.682 | 0.742 | 2.3 | 22 | 64 |

The electric cell resistance value of the cell in operating was measured with a commercially available ohmmeter meter from Tsuruga Electric Corporation (MODEL3565). Displayed cell resistance values were alternating-current impedance values at a frequency of 1 KHz. The examples were confirmed to have cell resistance values that were equal to or more excellent than the cell resistance values of the comparative examples and the cell resistance value of the steel material 18, which can be considered to have the most excellent cell resistance value. The concentrations of dissolved Fe ions and the concentrations of Fe ions captured in the MEA polymer film were also low, and thus it was determined that the example embodiment of the present invention had excellent performances. The polymer electrolyte fuel cells can be considered as high-performance polymer electrolyte fuel cells that are excellent in power generation performance and also excellent in durability.

### Example 3

Using the coil starting materials produced in Example 1, separators having a shape illustrated by a picture in figure 2 were produced by press forming, and then application evaluation was performed in an actual fuel cell. The area of a channel portion including a channel in a serpentine shape was 100 cm². Surface adjustment was performed in such a manner as to perform surface roughening by spray etching using a ferrous chloride solution, perform rinsing immediately thereafter, further perform spray pickling treatment and immersion treatment using a sulfuric acid aqueous solution or a nitric acid aqueous solution, and perform rinsing and drying treatment immediately thereafter. Surface adjustment in which the immersion treatment was omitted was partially performed. In this example, the concentration of an acid solution, spray treatment time period, and an immersion time period thereafter to be applied were set as appropriate. Specifically, they were set as follows, Condition 1: a sulfuric acid at a concentration of pH 2, a spray treatment time period of 60 seconds, and an immersion treatment time period of 30 minutes, Condition 2: a sulfuric acid at a concentration of 10%, a spray treatment time period of 30 seconds, and an immersion treatment time period of 3 minutes, Condition 3: a nitric acid at a concentration of pH 2, a spray treatment time period of 60 seconds, and an immersion treatment time period of 10 hours, Condition 4: a nitric acid at a concentration of 30%, a spray treatment time period of 40 seconds, and an immersion treatment time period of 10 hours. The temperatures of the acid aqueous solutions were all set at 35°C.

The condition specified for evaluating fuel cell operation was constant-current operation evaluation at a current density of 0.1 A/cm², which is one of the operation environments of home fuel cells. A hydrogen-oxygen utilization was set to be constant at 40%. The time period of the evaluation was 1000 hours. The concentrations of Fe ions are evaluation-measured values at the time when the operation of the fuel cell for 1000 hours was finished. Table 5 collectively shows the results of evaluation.

**[Table 5]**

| Steel material | | Kind and concentration of applied acid aqueous solution | Cell resistance value (mΩ) behavior in single-cell fuel cell operation | | Concentration of Fe ion in cathode electrode outlet gas condensate in fuel cell stack) (ppb) | Concentration of Fe ion in anode-electrode-side outlet gas condensate in fuel cell stack (ppb) | Concentration of Fe ion in MEApolymer film after operation end µg/100cm²) |
|---|---|---|---|---|---|---|---|
| | | | : Constant-current operation at 0.1 mA/cm², gas usage rate: 40% | | | | |
| | | | 50 hrs from operation start | 500 hrs from operation start | | | |
| 5 | Inventive Example | (Condition 1) pH 2 sulfuric acid | 0.632 | 0.654 | 2.2 | 20 | 58 |
| | | (Condition 2) 10% sulfuric acid | 0.693 | 0.753 | 2.2 | 22 | 62 |
| | | (Condition 3) pH 2 nitric acid | 1.024 | 0.875 | 2.1 | 18 | 56 |
| | | (Condition 4) 30% nitric acid | 0.956 | 0.876 | 2.2 | 19 | 64 |
| 14 | Comparative example | (Condition 1) pH 2 sulfuric acid | 1.664 | 2.239 | 13.3 | 121 | 173 |
| | | (Condition 2) 10% sulfuric acid | 1.542 | 2.568 | 12.4 | 108 | 148 |
| | | (Condition 3) pH 2 nitric acid | 2.278 | 2.674 | 18.4 | 132 | 280 |
| | | (Condition 4) 30% nitric acid | 2.185 | 2.665 | 15.8 | 125 | 267 |
| 18 | Comparative example | | 0.682 | 0.742 | 2.3 | 22 | 64 |

The electric cell resistance value of the cell in operating was measured with a commercially available ohmmeter meter from Tsuruga Electric Corporation (MODEL3565). Displayed cell resistance values were alternating-current impedance values at a frequency of 1 KHz. The inventive examples were confirmed to have cell resistance values that were equal to or more excellent than the cell resistance values of the comparative examples and the cell resistance value of the steel material 19, which can be considered to have the most excellent cell resistance value. The concentrations of dissolved Fe ions and the concentrations of Fe ions captured in the MEA polymer film were also low, and thus it was determined that the inventive example embodiment of the present invention had excellent performances. The polymer electrolyte fuel cells can be considered as high-performance polymer electrolyte fuel cells that are excellent in power generation performance and also excellent in durability.

### REFERENCE SIGNS LIST

- 1: fuel cell
- 2: polymer electrolyte membrane
- 3: fuel electrode film (anode)
- 4: oxidant electrode film (cathode)
- 5a, 5b: separator
- 6a, 6b: channel

## Claims

1. A ferritic stainless steel material used in a polymer electrolyte fuel cell separator, the ferritic stainless steel material having a chemical composition comprising, by mass%:
C: 0.001 to 0.030%;
Si: 0.20 to 1.5%;
Mn: 0.01 to 1.5%;
P: 0.035% or less;
S: 0.01% or less;
Cr: 22.5 to 35.0%;
Mo: 0.01 to 6.0%;
Ni: 0.01 to 6.0%;
Cu: 0.01 to 1.0%;
Sn: 0.10 to 2.5%;
In: 0.001 to 1.0%;
N: 0.035% or less,
V: 0.01 to 0.35%;
Al: 0.001 to 1.0%;
REM: 0 to 0.1 %;
Nb: 0 to 0.35%;
Ti: 0 to 0.35%, and
the balance: Fe and inevitable impurities, wherein
a calculated value of {Content of Cr (mass %) + 3 × Content of Mo (mass %)} is 22.5 to 45.0% by mass.

2. The ferritic stainless steel material according to claim 1, wherein the chemical composition includes
REM: 0.003 to 0.1%.

3. The ferritic stainless steel material according to claim 1 or claim 2, wherein the chemical composition includes
Nb: 0.001 to 0.35% and/or
Ti: 0.001 to 0.35%, and satisfies
3.0 ≤ Nb / C ≤ 25.0, 3.0 ≤; Ti / (C + N) ≤ 25.0.

4. A separator used for a polymer electrolyte fuel cell, the separator having the chemical composition according to any one of claim 1 to claim 3.

5. A polymer electrolyte fuel cell comprising the separator according to claim 4.

6. A method for producing a separator used for a polymer electrolyte fuel cell, the method comprising:
forming a sheet having the chemical composition according to any one of claim 1 to claim 3 into a separator;
thereafter, performing surface roughening by spray etching using a ferrous chloride solution at a Baume degree of 40° to 51° and a solution temperature from 30°C to 60°C; and
immediately thereafter, performing rinsing and drying.

7. A method for producing a separator used for a polymer electrolyte fuel cell, the method comprising:
forming a sheet having the chemical composition according to any one of claim 1 to claim 3 into a separator;
thereafter, performing surface roughening by spray etching using a ferrous chloride solution;
immediately thereafter, performing rinsing;
further performing spray pickling treatment or acid solution immersion treatment using a sulfuric acid aqueous solution at a concentration of less than 20% and at a temperature from a normal temperature to 60°C; and
immediately thereafter, performing rinsing and drying.

8. A method for producing a separator used for a polymer electrolyte fuel cell, the method comprising:
forming a sheet having the chemical composition according to any one of claim 1 to claim 3 into a separator;
thereafter, performing surface roughening by spray etching using a ferrous chloride solution;
immediately thereafter, performing rinsing;
further performing spray pickling treatment or acid solution immersion treatment using a nitric acid aqueous solution at a concentration of less than 40% and at a temperature from a normal temperature to 80°C; and
immediately thereafter, performing rinsing and drying.
